# EUROPEAN PATENT SPECIFICATION

(11) **EP 3 576 058 B1**
(45) Date of publication and mention of the grant of the patent: **10.09.2025**
(21) Application number: 18745456.6
(22) Date of filing: 29.01.2018
(51) Int. Cl.: G07F 17/00, G06Q 30/06, G07F 17/10, E05B 47/00, G07C 9/00, G07C 9/20

(54) **HIGH-COMPATIBILITY SHARED VEHICLE LEASING SYSTEM, VEHICLE AND VEHICLE LEASING METHOD**
HOCHKOMPATIBLES GEMEINSAMES FAHRZEUGLEASINGSYSTEM, FAHRZEUG UND FAHRZEUGLEASINGVERFAHREN
SYSTÈME DE LOCATION DE VÉHICULE PARTAGÉ À HAUTE COMPATIBILITÉ, VÉHICULE ET PROCÉDÉ DE LOCATION DE VÉHICULE

(30) Priority: 26.01.2017 CN 201710062984; 25.03.2017 CN 201720302302 U; 12.06.2017 CN 201710440912
(43) Date of publication of application: 04.12.2019
(73) Proprietor: Youon Technology Co., Ltd., Changzhou, Jiangsu 213000 (CN)
(72) Inventor: HUANG, Deyun, Changzhou Jiangsu 213000 (CN); TAO, Anping, Changzhou Jiangsu 213000 (CN); YIN, Yamin, Changzhou Jiangsu 213000 (CN); WANG, Danbo, Changzhou Jiangsu 213000 (CN); XU, Pei, Changzhou Jiangsu213000 (CN); LI, Suo, Changzhou Jiangsu 213000 (CN); LI, Fuwei, Changzhou Jiangsu 213000 (CN); MAO, Fei, Changzhou Jiangsu 213000 (CN)
(74) Representative: Ridderbusch, Oliver
(86) International application number: PCT/CN2018/000055
(87) International publication number: WO 2018/137475

(56) References cited:
- EP-A1- 1 821 266
- EP-A2- 1 281 588
- EP-A2- 1 926 060
- WO-A2-2010/071342
- CN-A- 104 424 719
- CN-A- 105 553 039
- CN-A- 105 809 520
- CN-A- 105 825 591
- CN-A- 106 920 145
- CN-A- 107 146 336
- CN-U- 203 012 857
- CN-U- 204 856 730
- CN-U- 205 335 940
- CN-U- 205 743 358
- CN-U- 206 892 929
- KR-A- 20120 123 941
- US-A1- 2015 074 004
- US-A1- 2016 241 999
- US-B1- 6 384 717
- TUCKER GAEGAUF ET AL: "Bikeshare Technology White Paper A Comparative Guide to the Different Technologies Offered by Bikesharing Vendors", 25 June 2014 (2014-06-25), XP055708964, Retrieved from the Internet <URL:http://mobility-workspace.eu/wp-content/uploads/Bikeshare_Technology_White_Paper.pdf>

## Description

### Technical field

This invention relates to a highly compatible shared bicycle rental system, and bicycle rental method.

### Background technique

With the increasing demand for environmental protection, bicycles are becoming more and more popular as a way of low-carbon travel, and public bicycles and shared bicycles without piles are the two most prominent ways. Public bicycles have multiple stations in the city, each of which is equipped with multiple lockers. People can rent a bicycle with a card or through scanning code. It has the advantage of realizing effective management, and each station can further expand other urban public functions. There is no station and locker for the shared bicycles without piles, and all bicycles belonging to the shared bicycle system can be rented. Although the cost is low in the initial operation, due to the lack of designated parking area and effective management, the bicycles are seriously damaged and parked at random, and it is inconvenient to find a bicycle. Especially when returning a bicycle, it is necessary to lock the shared bicycle first and then confirm the return on the mobile phone, which is not convenient. If these two modes can be effectively combined, it will undoubtedly facilitate the travel of people. In this sharing mode, the bicycles can be pushed into the lockers for public bicycles that have been installed in various areas of the city. In addition, with the public bicycle management function, the problems of random parking and bicycle damage can be effectively solved.

WO 2010/071342 A2, EP 1 926 060 A2, CN 205 743 358 U, EP 1 281 588 A2, US 2015/074004 A1, US 2016/241999 A1, the article by Tucker Gaegauf et al: "Bikeshare Technology White Paper A Comparative Guide to the Different Technologies Offered by Bikesharing Vendors", 25 June 2014, XP055708964, CN 203 012 857 U, CN 105 553 039 A, CN 205 335 940 U, CN 105 825 591 A, CN 204 856 730 U, CN 104 424 719 A, CN 105 809 520 A, and KR 2012 0123941 A each describe bicycles for renting. A lock may be provided to prevent usage of the bicycle during times outside a renting period. In some cases, e.g., described in US 2015/0074004 A1 and the article by Tucker Gaegauf et al, docking stations are used into which the bicycles are placed to be locked. An RFID lock and RFID to Bluetooth adapter for wireless communication is known from, e.g., US 2016/0241999 A1. Bluetooth communication in general is also used in EP 1 281 588 A2.

### Summary of the invention

The invention is directed at a highly compatible shared bicycle rental system and a bicycle rental method for a highly compatible shared bicycle rental system as defined by the independent claims.

A bicycle for a highly compatible shared bicycle rental system includes the bicycle body, and a multifunctional connector and a smart lock set on the bicycle body. The smart lock has a built-in wireless communication module, and the multifunctional connector has a built-in electronic card with a unique bicycle code and a smart lock identification code.

The smart lock further includes an IC card reader and a MCU; the wireless communication module includes wireless transmitting module and wireless receiving module; the output terminal of IC card reader is connected to MCU, the output terminal of MCU is connected to wireless communication module, and the IC card reader of smart lock reads the information of IC card and transmits it to MCU for identification and transmission to the wireless communication module; and a card swiping area is set on the smart lock housing.

The smart lock housing is provided with a paste area for the QR code and/or digital code which contains a smart lock identification code and a unique bicycle code.

The smart lock further includes a GPRS module and/or a GPS module for communication with MCU.

The bicycle body is provided with a QR code and/or digital code which contains a smart lock identification code and a unique bicycle code.

A purpose of this invention is to provide a highly compatible shared bicycle rental system and rental method as defined in the independent claims.

A Bluetooth communication module is set on the locker, specifically a highly compatible shared bicycle rental system, including stations and bicycles. The station includes lockers; a smart lock containing wireless communication module and a multifunctional connector with built-in electronic card are set on the bicycle body; the electronic card of multifunctional connector has a unique bicycle code and a smart lock identification code; a wireless communication module of the same type as that of smart lock is set on the locker; the wireless communication module includes wireless transmitting module and wireless receiving module; and the bicycle realizes the locking, identification of bicycle and smart lock, as well as the unlocking of smart lock through the multifunctional connector and locker. The wireless communication module is a Bluetooth communication module.

Specifically, this category of technical solutions can be divided into four kinds according to the different ways of subsequent bicycle rental: solution A: the locker includes controller, chip reader, IC card reader, electronic control lock and Bluetooth communication module; the locker's chip reader reads the information of the electronic card of bicycle multifunctional connector and transmits it to the controller for storage; the IC card reader reads the information of IC card and transmits the identification result to the controller; the electronic control lock is used to lock the bicycle multifunctional connector; and the controller controls the locking and unlocking of electronic control lock and the communication between Bluetooth communication module and smart lock to unlock the smart lock. In the solution A, the renting is realized through swiping the IC card on the locker.

When returning a bicycle, the bicycle multifunctional connector is inserted into the locker and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock;
When renting a bicycle, the IC card is swiped on the IC card reader of locker. If the IC card cannot be identified, the renting is refused. If the IC card is successfully identified, the controller establishes the Bluetooth connection with the smart lock through Bluetooth communication module and Bluetooth identification code of the smart lock, and then sends an unlocking signal to unlock the smart lock after the connection is established. At the same time or later, the controller sends an unlocking signal to unlock the electronic control lock of the locker to complete the renting. After a bicycle is rented, its smart lock cannot be locked manually, and the locker periodically scans the bicycle's smart lock to maintain it in a state in which it cannot be locked manually.

The solution B is an extension of the solution A: The smart lock of each bicycle further includes an IC card reader and a MCU; the wireless communication module includes wireless transmitting module and wireless receiving module; the output terminal of the IC card reader is connected to the MCU, the output terminal of the MCU is connected to the wireless communication module, and the IC card reader of the bicycle's smart lock reads the information of the IC card and transmits it to the MCU for identification and transmission to the wireless communication module; and a card swiping area is set on the smart lock housing. In the solution B, the renting can be realized through swiping the IC card on the locker or smart lock.

When returning a bicycle, the bicycle multifunctional connector is inserted into the locker and the electronic control lock of the locker locks the multifunctional connector to complete the returning; at the same time, the locker's chip reader reads the information of the electronic card of the bicycle's multifunctional connector to obtain the unique bicycle code and Bluetooth identification code of the bicycle's smart lock;

When renting a bicycle, the IC card is swiped on the IC card reader of the locker; if the IC card cannot be identified, the renting is refused; if the IC card is successfully identified, the controller establishes the Bluetooth connection with the smart lock through the Bluetooth communication module and Bluetooth identification code of the smart lock, and then sends an unlocking signal to unlock the smart lock after the connection is established; at the same time or later, the controller sends an unlocking signal to unlock the electronic control lock of locker to complete the renting;
Alternatively, the IC card is swiped on the IC card reader of locker. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of the smart lock and then sends an unlocking signal to unlock the smart lock after the connection is established; at the same time or later, the controller sends an unlocking signal to unlock the electronic control lock of the locker to complete the renting.

For illustrative purposes and better understanding of some features of the invention only, another design is described in the following, referred to as "solution C": The locker includes controller, chip reader, electronic control lock and Bluetooth communication module; the locker's chip reader reads the information of the electronic card of bicycle multifunctional connector, and transmits it to the controller for storage; the electronic control lock is used to lock the bicycle multifunctional connector; the controller controls the locking and unlocking of electronic control lock and the communication between Bluetooth communication module and smart lock to unlock the smart lock; the locker housing is provided with a QR code and/or digital code which contains a Bluetooth identification code of locker Bluetooth communication module and a unique locker code; the bicycle body or smart lock housing is provided with a QR code and/or digital code which contains a Bluetooth identification code of smart lock and a unique bicycle code; the highly compatible shared bicycle rental system further includes a background cloud server; and the cloud server has the function of identifying the renter. The solution C realizes the renting through scanning the code (QR code on the locker or bicycle).

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;
When renting a bicycle, the mobile terminal is used to scan the QR code on the locker housing/input digital code/search locker Bluetooth identification code and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;
The mobile terminal can be used to scan the QR code on the bicycle body or smart lock housing/input digital code/search locker Bluetooth identification code and verify the identity of mobile terminal user through cloud server; if the identity is wrong, the renting is refused, and if the identity is correct, the smart lock establishes the Bluetooth connection with mobile terminal, and a request for unlocking the smart lock is made on the mobile terminal; at the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting;
The mobile terminal can be used to scan the QR code on the bicycle body or locker housing/input digital code/search locker Bluetooth identification code and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module. At the same time or later, the controller sends an unlocking signal to unlock the electronic control lock of locker to complete the renting.

When renting a bicycle, if the bicycle is parked in the locker, scan the code or input the digital code, and the locker issues an instruction to set the smart lock to a state in which it can be locked manually; and if the bicycle is not parked in the locker, scan the code or input the digital code, and the smart lock is maintained in a state in which it can be locked manually;
When returning a bicycle, the user locks the smart lock to return the bicycle or returns the bicycle to the locker which issues an instruction to set the smart lock to a state in which it cannot be locked manually. The locker periodically scans and locks the smart lock to maintain it in a state in which it cannot be locked manually.

An extension of the above design ("solution C") is described in the following and is referred to as "solution D": The smart lock further includes an IC card reader and a MCU; the wireless communication module includes wireless transmitting module and wireless receiving module; the output terminal of IC card reader is connected to MCU, the output terminal of MCU is connected to wireless communication module, and the IC card reader of smart lock reads the information of IC card and transmits it to MCU for identification and transmission to the wireless communication module; and a card swiping area is set on the smart lock housing. In the solution C, the renting is realized through scanning the code (QR code on the locker or bicycle).

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;
When renting a bicycle, the mobile terminal is used to scan the QR code on the locker housing and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;
The mobile terminal can be used to scan the QR code on bicycle body or smart lock housing and verify the identity of mobile terminal user through cloud server. If the identity is wrong, the renting is refused. If the identity is correct, the smart lock establishes the Bluetooth connection with mobile terminal and a request for unlocking the smart lock is made on the mobile terminal. At the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting.

Alternatively, the mobile terminal is used to scan the QR code on bicycle body or smart lock housing and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the controller sends an unlocking signal to unlock the smart lock through Bluetooth communication module. At the same time or later, the controller sends an unlocking signal to unlock the electronic control lock of locker to complete the renting.

The IC card can be swiped on the IC card reader of smart lock. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting.

The second category of technical solutions are to set up a wireless communication module on the station controller, specifically a highly compatible shared bicycle rental system, including stations and bicycles. The station includes a station controller and multiple lockers connected through wire communication, characterized in that a smart lock containing wireless communication module and a multifunctional connector with built-in electronic card are set on the bicycle body; the electronic card of multifunctional connector has a unique bicycle code and a smart lock identification code; a wireless communication module of the same type as that of smart lock is set on the station controller; the wireless communication module of station controller includes wireless transmitting module and wireless receiving module; and the bicycle realizes the locking, identification of bicycle and smart lock, as well as the unlocking of smart lock through the multifunctional connector and locker. The wireless communication module is a Bluetooth communication module.

Specifically, this category of technical solutions can be divided into four kinds according to the different ways of subsequent bicycle rental, solution E: each locker includes controller, chip reader, IC card reader and electronic control lock; the Bluetooth communication module of station controller communicates with the smart lock; the locker's chip reader reads the information of the electronic card of bicycle multifunctional connector and transmits it to the controller for storage; the locker's IC card reader reads the information of IC card and transmits the identification result to the controller; the electronic control lock of locker is used to lock the bicycle multifunctional connector; and the locker controller controls the locking and unlocking of electronic control lock. In the solution E, the renting is realized through swiping the IC card on the locker.

When returning a bicycle, the bicycle multifunctional connector is inserted into the locker, and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock and transmits them to the station controller for storage through wire communication;
When renting a bicycle, the IC card is swiped on the IC card reader of locker. If the IC card cannot be identified, the renting is refused; if the IC card is successfully identified, the station controller obtains the successful identification information, establishes the Bluetooth connection with smart lock through Bluetooth communication module and Bluetooth identification code of smart lock, and sends an unlocking signal to unlock the smart lock after the connection is established; at the same time or later, the station controller sends an unlocking signal to unlock the electronic control lock of locker to complete the renting.

The solution F is an extension of the solution E: The smart lock further includes an IC card reader and a MCU; the wireless communication module includes wireless transmitting module and wireless receiving module; the output terminal of IC card reader is connected to MCU, the output terminal of MCU is connected to wireless communication module, and the IC card reader of smart lock reads the information of IC card and transmits it to MCU for identification and transmission to the wireless communication module; and a card swiping area is set on the smart lock housing. In the solution F, the renting is realized through swiping the IC card on the locker or smart lock.

When returning a bicycle, the bicycle multifunctional connector is inserted into the locker, and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock and transmits them to the station controller for storage through CAN bus;
When renting a bicycle, the IC card is swiped on the IC card reader of locker. If the IC card cannot be identified, the renting is refused; if the IC card is successfully identified, the station controller obtains the successful identification information, establishes the Bluetooth connection with smart lock through Bluetooth communication module and Bluetooth identification code of smart lock, and sends an unlocking signal to unlock the smart lock after the connection is established; at the same time or later, the station controller sends an unlocking signal to unlock the electronic control lock of locker to complete the renting.

The IC card can be swiped on the IC card reader of locker. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting.

For illustrative purposes and better understanding of some features of the invention only, another design is described in the following, referred to as "solution G": Each locker includes controller, chip reader and electronic control lock; the Bluetooth communication module of station controller communicates with the smart lock; the locker's chip reader reads the information of the electronic card of information of multifunctional connector and transmits it to the controller for storage; the electronic control lock of locker is used to lock the bicycle multifunctional connector; the locker controller controls the locking and unlocking of electronic control lock; the locker housing is provided with a QR code/digital code which contains a Bluetooth code of station controller Bluetooth communication module and a unique locker code; the bicycle body or smart lock housing is provided with a QR code/digital code which contains a smart lock Bluetooth code and a unique bicycle code; and the highly compatible shared bicycle rental system further includes a background cloud server with the function of identifying the renter. In the solution G, the renting is realized through scanning the code (QR code on the locker or bicycle).

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the station controller initiates a connection to the smart lock through Bluetooth identification code of smart lock, and transmits the Bluetooth identification code of the Bluetooth communication module of station controller and the unique locker code to the smart lock for storage after the connection is established;
When renting a bicycle, the mobile terminal is used to scan the QR code on the locker housing/input digital code/search locker Bluetooth identification code and verify the identity of mobile terminal user through cloud server; if the identity is wrong, the renting is refused, and if the identity is correct, the station controller establishes the Bluetooth connection with mobile terminal, an unlocking request is made on the mobile terminal, and the station controller sends an unlocking signal to unlock the smart lock through Bluetooth communication module; at the same time or later, the station controller sends an unlocking signal to unlock the electronic control lock of locker to complete the renting;
The mobile terminal can be used to scan the QR code on the locker housing/input digital code/search locker Bluetooth identification code and verify the identity of mobile terminal user through cloud server. If the identity is wrong, the renting is refused. If the identity is correct, the smart lock establishes the Bluetooth connection with mobile terminal, and a request for unlocking the smart lock is made on the mobile terminal. At the same time or later, the Bluetooth identification code of the Bluetooth communication module of station controller and the unique locker code temporarily stored in the smart lock are obtained, through which a connection with the corresponding locker is established, and the station controller sends an unlocking signal to unlock the electronic control lock of corresponding locker through wire communication to complete the renting.

An extension of the above design ("solution G") is described in the following and referred to as "solution H": The smart lock further includes an IC card reader and a MCU; the wireless communication module includes wireless transmitting module and wireless receiving module; the output terminal of IC card reader is connected to MCU, the output terminal of MCU is connected to wireless communication module, and the IC card reader of smart lock reads the information of IC card and transmits it to MCU for identification and transmission to the wireless communication module; and a card swiping area is set on the smart lock housing. In the solution H, the renting is realized through scanning the code (QR code on the locker or bicycle).

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;
When renting a bicycle, the IC card is swiped on the IC card reader of locker. If the IC card cannot be identified, the renting is refused; if the IC card is successfully identified, the MCU sends information to the Bluetooth communication module, and the controller establishes the Bluetooth connection with smart lock through Bluetooth communication module and Bluetooth identification code of smart lock and then sends an unlocking signal to unlock the smart lock after the connection is established; at the same time or later, the controller sends an unlocking signal to unlock the electronic control lock of locker to complete the renting.

The mobile terminal can be used to scan the QR code on the locker housing and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;
The mobile terminal can be used to scan the QR code on the bicycle body or smart lock housing and verify the identity of mobile terminal user through cloud server; if the identity is wrong, the renting is refused, and if the identity is correct, the smart lock establishes the Bluetooth connection with mobile terminal, and an request for unlocking the smart lock is made on the mobile terminal; at the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting;
The mobile terminal can be used to scan the QR code on the bicycle body or smart lock housing and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module; at the same time or later, the controller sends an unlocking signal to unlock the electronic control lock of locker to complete the renting.

The third category is an integrated solution, a highly compatible shared bicycle rental system, including stations, bicycles and cloud servers. The station includes a station controller and multiple lockers connected through wire communication, characterized in that a smart lock containing wireless communication module and a multifunctional connector with built-in electronic card are set on the bicycle body; the electronic card of multifunctional connector has a unique bicycle code and a smart lock identification code; a wireless communication module of the same type as that of smart lock is set on the locker; the cloud server includes a function of identifying the renter; the wireless communication module includes wireless transmitting module and wireless receiving module; and the bicycle realizes the locking, identification of bicycle and smart lock, as well as the unlocking of smart lock through the multifunctional connector and locker. The wireless communication module is a Bluetooth communication module. The locker includes controller, chip reader, IC card reader, electronic control lock and Bluetooth communication module; the locker's chip reader reads the information of the electronic card of bicycle multifunctional connector and transmits it to the controller for storage; the IC card reader reads the information of IC card and transmits the identification result to the controller; the electronic control lock is used to lock the bicycle multifunctional connector; and the controller controls the locking and unlocking of electronic control lock and the communication between Bluetooth communication module and smart lock to unlock the smart lock; the locker housing is provided with a QR code and/or digital code which contains a Bluetooth identification code of locker Bluetooth communication module and a unique locker code; and the bicycle body or smart lock housing is provided with a QR code and/or digital code which contains a Bluetooth identification code of smart lock and a unique bicycle code. The smart lock further includes an IC card reader and a MCU; the wireless communication module includes wireless transmitting module and wireless receiving module; the output terminal of IC card reader is connected to MCU, the output terminal of MCU is connected to wireless communication module, and the IC card reader of smart lock reads the information of IC card and transmits it to MCU for identification and transmission to the wireless communication module; and a card swiping area is set on the smart lock housing.

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;
When renting a bicycle, the IC card is swiped on the IC card reader of locker; if the IC card cannot be identified, the renting is refused; if the IC card is successfully identified, the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting;
Alternatively, the IC card is swiped on the IC card reader of locker. If the IC card cannot be identified, the renting is refused; if the IC card is successfully identified, the MCU sends information to the Bluetooth communication module, and the controller establishes the Bluetooth connection with smart lock through Bluetooth communication module and Bluetooth identification code of smart lock and then sends an unlocking signal to unlock the smart lock after the connection is established; at the same time or later, the controller sends an unlocking signal to unlock the electronic control lock of locker to complete the renting.

Alternatively, the mobile terminal is used to scan the QR code on the locker housing/input digital code/search locker Bluetooth identification code and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;
Alternatively, the mobile terminal is used to scan the QR code on the bicycle body or locker housing/input digital code/search locker Bluetooth identification code and verify the identity of mobile terminal user through cloud server; if the identity is wrong, the renting is refused, and if the identity is correct, the smart lock establishes the Bluetooth connection with mobile terminal, and a request for unlocking the smart lock is made on the mobile terminal; at the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting;
Alternatively, the mobile terminal is used to scan the QR code on the bicycle body or locker housing/input digital code/search locker Bluetooth identification code and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module. At the same time or later, the controller sends an unlocking signal to unlock the electronic control lock of locker to complete the renting.

In this invention, bicycles include electric bicycles, and IC cards include contact type IC cards and non-contact type IC cards.

The smart lock further includes a GPRS module and/or GPS module for communication with MCU, and automatically uploads location information and rental information by itself. In this invention, bicycles include but are not limited to one or more electric types of two-wheeled bicycles, tricycles, bicycles, mopeds, electric bicycles or balance bicycles, IC cards include contact type IC cards and non-contact type IC cards, and wireless communication methods include but are not limited to one or more technologies such as Wi-Fi, Zigbee, infrared communication, IOT and Bluetooth.

After adopting the above technical solutions, this invention has the following positive effects: (1) In this invention, a smart lock is set on the bicycle, a wireless communication module is set at station (locker or station controller), and the unique bicycle code and smart lock identification code are set in the electronic control card of multifunctional connector to be locked on the bicycle. The bicycle is pushed into the locker when returned, and the locker obtains the corresponding bicycle code and smart lock identification code, through which a wireless connection with the smart lock can be established to unlock smart lock. Therefore, the existing scattered shared bicycles without management functions can be incorporated into a public bicycle system with stations with perfect management functions to realize mutual rental and give full play to the advantages of both.
(2) This invention adds an IC card reader and a MCU to the bicycle smart lock. The IC card reader reads the information of IC card and transmits it to MCU for compliance judgment. If it is a compliant card, MCU sends the information to the Bluetooth communication module for subsequent rental.
(3) For the wireless communication module, this invention adopts the Bluetooth communication module which is easier to implement with the most stable and reliable operation.
(4) In this invention, two current methods of bicycle rental, IC card and scanning a code, are respectively considered, designed correspondingly and superimposed in the setting of rental system to obtain a convenient rental system that can be used by both.
(5) In this invention, considering that each station has two facilities, i.e. station controller and locker, in the setting of rental system, the corresponding branch station controller or the locker is equipped with a Bluetooth communication module, and an easy-to-operate returning mode is correspondingly determined. The Bluetooth is set on the locker to realize quick response and convenient operation. Although the number of bicycles that can be borrowed at the same time is limited, it is more economical to set Bluetooth on the station controller because each station only needs one Bluetooth communication module.
(6) The design of the rental system setting and rental method in this invention fully considers the non-network mode, that is, the rental system in this invention can complete the renting and returning of bicycles when the station controller is disconnected from the network.
(7) In this invention, the smart lock and the locker are unlocked simultaneously, or the locker is unlocked first and then the locker is unlocked, which is conducive to operation and avoids that the locker is unlocked first while the smart lock is not unlocked when the user pushes the bicycle out of the locker, causing the failure to use the bicycle normally and affecting the hub and the lock.
(8) This invention controls the bicycle entering the locker to be in a state in which it cannot be locked manually, thereby ensuring that when the bicycle is parked in the locker, one cannot lock the smart lock arbitrarily to avoid damage to smart lock. At the same time, when renting a bicycle with card, one cannot return the bicycle through locking arbitrarily to avoid the failure to upload rental information to the background. Therefore, various technical problems of integrating the public bicycle rental system and the shared bicycle rental system are straightened out, really realizing the compatible sharing and rental of public bicycles.

### Description of attached figures

In order to make the contents of this invention more easily understood, this invention is described in further detail according to specific embodiment and in combination with the attached figures, wherein:
Figure 1 is a structure block diagram of the rental system in Embodiment 1 of this invention.
Figure 2 is a structure block diagram of the rental system in Embodiment 2 of this invention.
Figure 3 is a structure block diagram of the rental system in Embodiment 3 of this invention.
Figure 4 is a structure block diagram of the rental system in Embodiment 4 of this invention.
Figure 5 is a structure block diagram of the rental system in Embodiment 5 of this invention.
Figure 6 is a structure block diagram of the rental system in Embodiment 6 of this invention.
Figure 7 is a structure block diagram of the rental system in Embodiment 7 of this invention.
Figure 8 is a structure block diagram of the rental system in Embodiment 8 of this invention.
Figure 9 is a structure block diagram of the rental system in Embodiment 9 of this invention.
Figure 10 is a structure block diagram of the rental system in Embodiment 10 of this invention.

### Specific implementation modes

### (Embodiment 1)

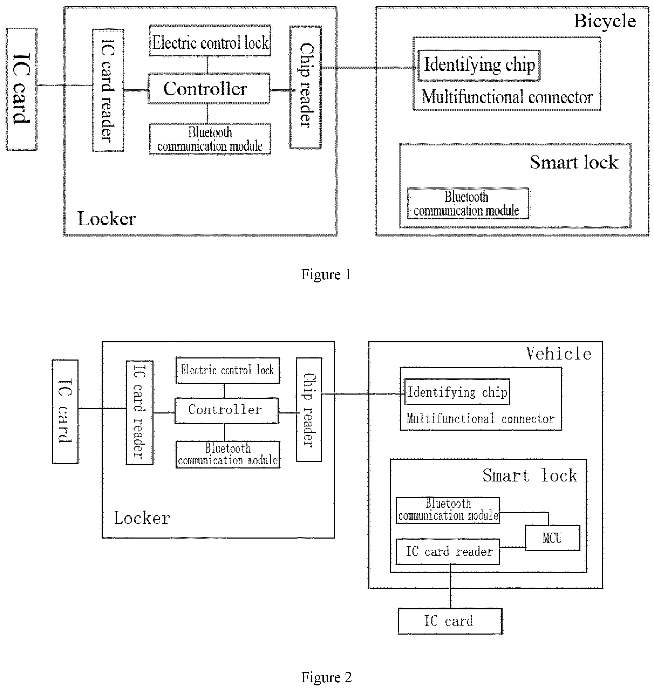

Figure 1 shows a highly compatible shared bicycle rental system including stations and bicycles in this embodiment. The station includes lockers; a smart lock containing wireless communication module and a multifunctional connector with built-in electronic card are set on the bicycle body; the electronic card of multifunctional connector has a unique bicycle code and a smart lock identification code; a Bluetooth communication module is set on the locker; the Bluetooth communication module includes Bluetooth transmitting module and wireless receiving module; and the bicycle realizes the locking, identification of bicycle and smart lock, as well as the unlocking of smart lock through the multifunctional connector and locker. The locker includes controller, chip reader, IC card reader, electronic control lock and Bluetooth communication module; the locker's chip reader reads the information of the electronic card of bicycle multifunctional connector and transmits it to the controller for storage; the IC card reader reads the information of IC card and transmits the identification result to the controller; the electronic control lock is used to lock the bicycle multifunctional connector; and the controller controls the locking and unlocking of electronic control lock and the communication between Bluetooth communication module and smart lock to unlock the smart lock.

When returning a bicycle, the bicycle multifunctional connector is inserted into the locker and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock;

When renting a bicycle, the IC card is swiped on the IC card reader of locker. If the IC card cannot be identified, the renting is refused. If the IC card is successfully identified, the controller establishes the Bluetooth connection with smart lock through Bluetooth communication module and Bluetooth identification code of smart lock, and then sends an unlocking signal to unlock the smart lock after the connection is established. At the same time or later, the controller sends an unlocking signal to unlock the electronic control lock of locker to complete the renting.

After the bicycle is rented out, the smart lock cannot be locked manually, and the locker periodically scans the bicycle smart lock to maintain it in a state in which it cannot be locked manually.

### (Embodiment 2)

Figure 2 shows a highly compatible shared bicycle rental system in this embodiment, with the following differences from that in Embodiment 1: The renting can be realized through swiping card on the smart lock in this embodiment. The smart lock further includes an IC card reader and a MCU; the wireless communication module includes wireless transmitting module and wireless receiving module; the output terminal of IC card reader is connected to MCU, the output terminal of MCU is connected to wireless communication module, and the IC card reader of smart lock reads the information of IC card and transmits it to MCU for identification and transmission to the wireless communication module; and a card swiping area is set on the smart lock housing.

When returning a bicycle, the bicycle multifunctional connector is inserted into the locker and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock;

When renting a bicycle, the IC card is swiped on the IC card reader of locker; if the IC card cannot be identified, the renting is refused; if the IC card is successfully identified, the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting;

Alternatively, the IC card is swiped on the IC card reader of locker. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of smart lock and then sends an unlocking signal to unlock the smart lock after the connection is established; at the same time or later, the controller sends an unlocking signal to unlock the electronic control lock of locker to complete the renting.

Similarly, after a bicycle is rented, the smart lock cannot be locked manually, and the locker periodically scans the bicycle smart lock to maintain it in a state in which it cannot be locked manually.

### (Embodiment 3)

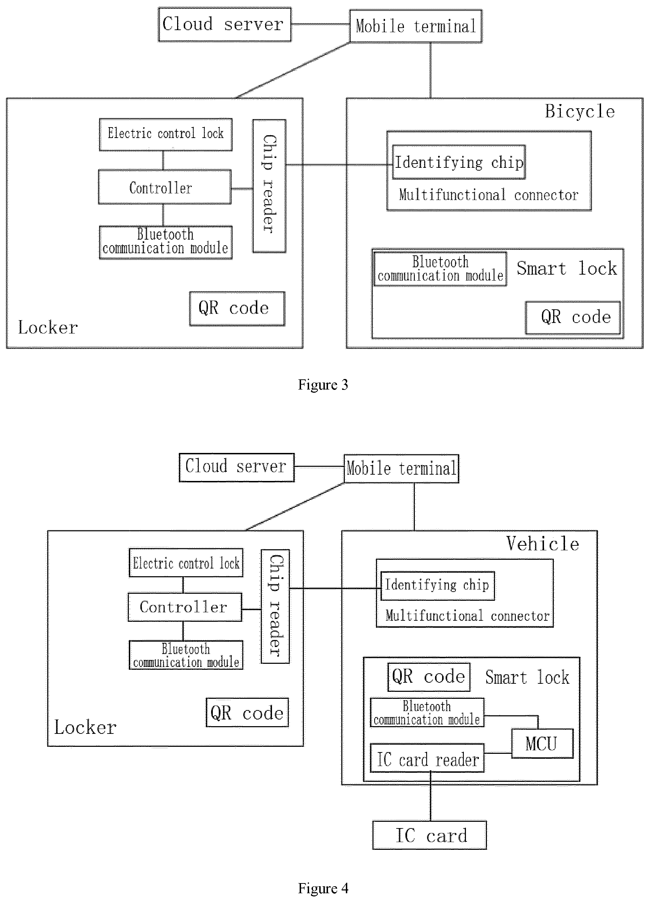

Figure 3 shows a highly compatible shared bicycle rental system in this embodiment, with the following differences from that in Embodiment 1: The renting is realized through scanning code; the locker includes controller, chip reader, electronic control lock and Bluetooth communication module; the locker's chip reader reads the information of the electronic card of bicycle multifunctional connector and transmits it to the controller for storage; the electronic control lock is used to lock the bicycle multifunctional connector; the controller controls the locking and unlocking of electronic control lock and the communication between Bluetooth communication module and smart lock to unlock the smart lock; the locker housing is provided with a QR code which contains a Bluetooth identification code of locker Bluetooth communication module and a unique locker code; the bicycle body or smart lock housing is provided with a QR code which contains a Bluetooth identification code of smart lock and a unique bicycle code; due to the need for authentication in the mode of rental through scanning code, the highly compatible shared bicycle rental system further includes a background cloud server; and the cloud server has the function of identifying the renter.

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;

When renting a bicycle, the mobile terminal is used to scan the QR code on the locker housing and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;

Alternatively, the mobile terminal is used to scan the QR code on the bicycle body or smart lock housing and verify the identity of mobile terminal user through cloud server. If the identity is wrong, the renting is refused. If the identity is correct, the smart lock establishes the Bluetooth connection with mobile terminal, and a request for unlocking the smart lock is made on the mobile terminal. At the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting.

Alternatively, the mobile terminal is used to scan the QR code on the bicycle body or smart lock housing and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module. At the same time or later, the controller sends an unlocking signal to unlock the electronic control lock of locker to complete the renting.

If the bicycle is parked in the locker, scan the code or input the digital code to rent the bicycle, and the locker issues an instruction to set the smart lock to a state in which it can be locked manually;

If the bicycle is not parked in the locker, scan the code or input the digital code to rent the bicycle, and the smart lock is maintained in a state in which it can be locked manually;

When renting the bicycle through scanning the code or inputting the digital code, the user can lock the smart lock to return the bicycle or the user can return the bicycle to the locker. After the locker is locked, it issues an instruction to set the smart lock to a state in which it cannot be locked manually.

### (Embodiment 4)

As shown in Figure 4, the smart lock's function of renting a bicycle with IC card is added in this embodiment on the basis of Embodiment 3. The mechanism of smart lock is shown in embodiment 2.

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;

When renting a bicycle, the mobile terminal is used to scan the QR code on the locker housing and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;

Alternatively, the mobile terminal is used to scan the QR code on the bicycle body or locker housing and verify the identity of mobile terminal user through cloud server. If the identity is wrong, the renting is refused. If the identity is correct, the smart lock establishes the Bluetooth connection with mobile terminal and a request for unlocking the smart lock is made on the mobile terminal. At the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting.

Alternatively, the mobile terminal is used to scan the QR code on the bicycle body or locker housing and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module. At the same time or later, the controller sends an unlocking signal to unlock the electronic control lock of locker to complete the renting.

Alternatively, the IC card is swiped on the IC card reader of smart lock. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting.

If the bicycle is parked in the locker, swipe card on the smart lock to rent a bicycle and the smart lock is maintained in a state in which it cannot be locked manually; if the bicycle is rented through scanning the code or inputting the digital code, the locker issues an instruction to set the smart lock to a state in which it can be locked manually;
If the bicycle is not parked in the locker, scan the code or input the digital code to rent the bicycle, and the smart lock is maintained in a state in which it can be locked manually;
If the bicycle is rented through swiping card, the user returns the bicycle to the locker;
When renting the bicycle through scanning the code or inputting the digital code, the user can lock the smart lock to return the bicycle or the user can return the bicycle to the locker. After the locker is locked, it issues an instruction to set the smart lock to a state in which it cannot be locked manually.

### (Embodiment 5)

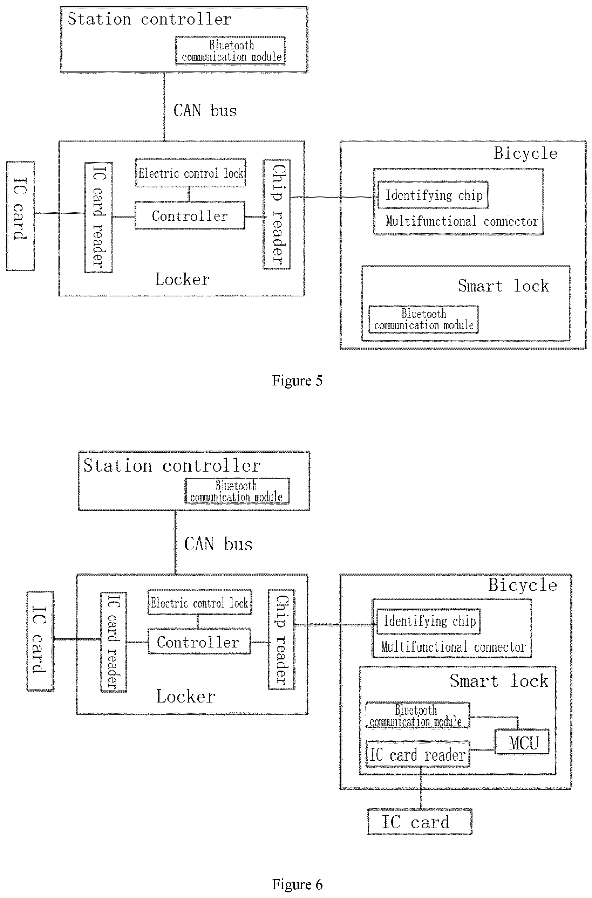

Figure 5 shows a highly compatible shared bicycle rental system including stations and bicycles in this embodiment. The station includes a station controller and multiple lockers connected via CAN bus communication; a smart lock containing wireless communication module and a multifunctional connector with built-in electronic card are set on the bicycle body; the electronic card of multifunctional connector has a unique bicycle code and a smart lock identification code; a Bluetooth communication module is set on the station controller; the station controller Bluetooth communication module includes Bluetooth transmitting module and Bluetooth receiving module; and the bicycle realizes the locking, identification of bicycle and smart lock, as well as the unlocking of smart lock through the multifunctional connector and locker. Each locker includes controller, chip reader, IC card reader and electronic control lock; the Bluetooth communication module of station controller communicates with the smart lock; the locker's chip reader reads the information of the electronic card of bicycle multifunctional connector and transmits it to the controller for storage; the locker's IC card reader reads the information of IC card, and transmits the identification result to the controller; the electronic control lock of locker is used to lock the bicycle multifunctional connector; and the locker controller controls the locking and unlocking of electronic control lock.

When returning a bicycle, the bicycle multifunctional connector is inserted into the locker, and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock and transmits them to the station controller for storage through CAN bus;
When renting a bicycle, the IC card is swiped on the IC card reader of locker. If the IC card cannot be identified, the renting is refused; if the IC card is successfully identified, the station controller obtains the successful identification information, establishes the Bluetooth connection with smart lock through Bluetooth communication module and Bluetooth identification code of smart lock, and sends an unlocking signal to unlock the smart lock after the connection is established; at the same time or later, the station controller sends an unlocking signal to unlock the electronic control lock of locker to complete the renting.

After the bicycle is rented out, the smart lock cannot be locked manually, and the locker periodically scans the bicycle smart lock to maintain it in a state in which it cannot be locked manually.

### (Embodiment 6)

Figure 6 shows a highly compatible shared bicycle rental system in this embodiment, with the following differences from that in Embodiment 5: The renting can be realized through swiping card on the smart lock in this embodiment.

When returning a bicycle, the bicycle multifunctional connector is inserted into the locker, and the electronic control lock of locker locks the multifunctional connector to complete the returning; at the same time, the locker's chip reader reads the information of the electronic card of bicycle multifunctional connector to obtain the unique bicycle code and Bluetooth identification code of smart lock and transmits them to the station controller for storage through CAN bus;
When renting a bicycle, the IC card is swiped on the IC card reader of locker. If the IC card cannot be identified, the renting is refused; if the IC card is successfully identified, the station controller obtains the successful identification information, establishes the Bluetooth connection with smart lock through Bluetooth communication module and Bluetooth identification code of smart lock, and sends an unlocking signal to unlock the smart lock after the connection is established; at the same time or later, the station controller sends an unlocking signal to unlock the electronic control lock of locker to complete the renting.

Alternatively, the IC card is swiped on the IC card reader of locker. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting.

After the bicycle is rented out, the smart lock cannot be locked manually, and the locker periodically scans the bicycle smart lock to maintain it in a state in which it cannot be locked manually.

### (Embodiment 7)

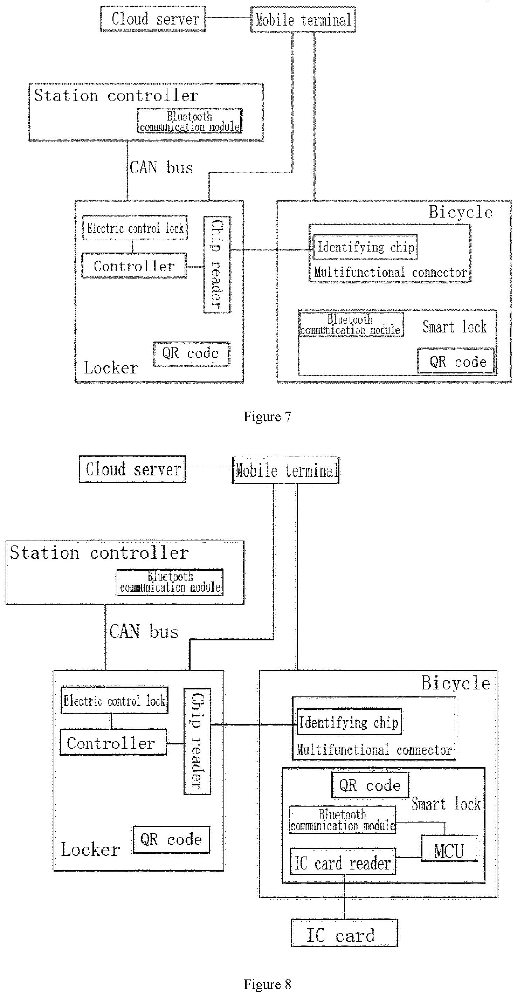

As shown in Figure 7, this embodiment is further applied to rent a bicycle through scanning the code. Each locker includes controller, chip reader, IC card reader and electronic control lock; the Bluetooth communication module of station controller communicates with the smart lock; the locker' s chip reader reads the information of the electronic card of bicycle multifunctional connector and transmits it to the controller for storage; the electronic control lock of locker is used to lock the bicycle multifunctional connector; the locker controller controls the locking and unlocking of electronic control lock; the locker housing is provided with a QR code which contains a Bluetooth identification code of locker Bluetooth communication module and a unique locker code; the bicycle body or smart lock housing is provided with a QR code which contains a Bluetooth identification code of smart lock and a unique bicycle code; the highly compatible shared bicycle rental system further includes a background cloud server; and the cloud server has the function of identifying the renter.

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock and transmits them to the station controller for storage through CAN bus; at the same time, the station controller initiates a connection to the smart lock through Bluetooth identification code of smart lock, and transmits the Bluetooth identification code of the Bluetooth communication module of station controller and the unique locker code to the smart lock for storage after the connection is established;
When renting a bicycle, the mobile terminal is used to scan the QR code on the locker housing and verify the identity of mobile terminal user through cloud server; if the identity is wrong, the renting is refused, and if the identity is correct, the station controller establishes the Bluetooth connection with mobile terminal, an unlocking request is made on the mobile terminal, and the station controller sends an unlocking signal to unlock the smart lock through Bluetooth communication module; at the same time or later, the station controller sends an unlocking signal to unlock the electronic control lock of locker through CAN bus to complete the renting;
Alternatively, the mobile terminal is used to scan the QR code on the bicycle body or smart lock housing and verify the identity of mobile terminal user through cloud server. If the identity is wrong, the renting is refused. If the identity is correct, the smart lock establishes the Bluetooth connection with mobile terminal, and a request for unlocking the smart lock is made on the mobile terminal. At the same time or later, the Bluetooth identification code of the Bluetooth communication module of station controller and the unique locker code temporarily stored in the smart lock are obtained, through which a connection with the corresponding locker is established, and the station controller sends an unlocking signal to unlock the electronic control lock of locker through CAN bus to complete the renting.

If the bicycle is parked in the locker, scan the code or input the digital code to rent the bicycle, and the smart lock is maintained in a state in which it can be locked manually;
If the bicycle is not parked in the locker, scan the code or input the digital code to rent the bicycle, and the smart lock is maintained in a state in which it can be locked manually;
When renting the bicycle through scanning the code or inputting the digital code, the user can lock the smart lock to return the bicycle or the user can return the bicycle to the locker. After the locker is locked, it issues an instruction to set the smart lock to a state in which it cannot be locked manually.

### (Embodiment 8)

As shown in Figure 8, the smart lock's function of renting the bicycle with IC card is added in this embodiment on the basis of Embodiment 7. The mechanism of smart lock is shown in embodiment 2.

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;

When renting a bicycle, the IC card is swiped on the IC card reader of locker. If the IC card cannot be identified, the renting is refused; if the IC card is successfully identified, the MCU sends information to the Bluetooth communication module, and the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting.

Alternatively, the mobile terminal is used to scan the QR code on locker housing and verify the identity of mobile terminal user through cloud server; if the identity is wrong, the renting is refused, and if the identity is correct, the locker establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;
Alternatively, the mobile terminal is used to scan the QR code on the bicycle body or smart lock housing and verify the identity of mobile terminal user through cloud server; if the identity is wrong, the renting is refused, and if the identity is correct, the smart lock establishes the Bluetooth connection with mobile terminal, and an request for unlocking the smart lock is made on the mobile terminal; at the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting;
Alternatively, the mobile terminal is used to scan the QR code on the bicycle body or smart lock housing and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module; at the same time or later, the controller sends an unlocking signal to unlock the electronic control lock of locker to complete the renting.

### (Embodiment 9 and Embodiment 10)

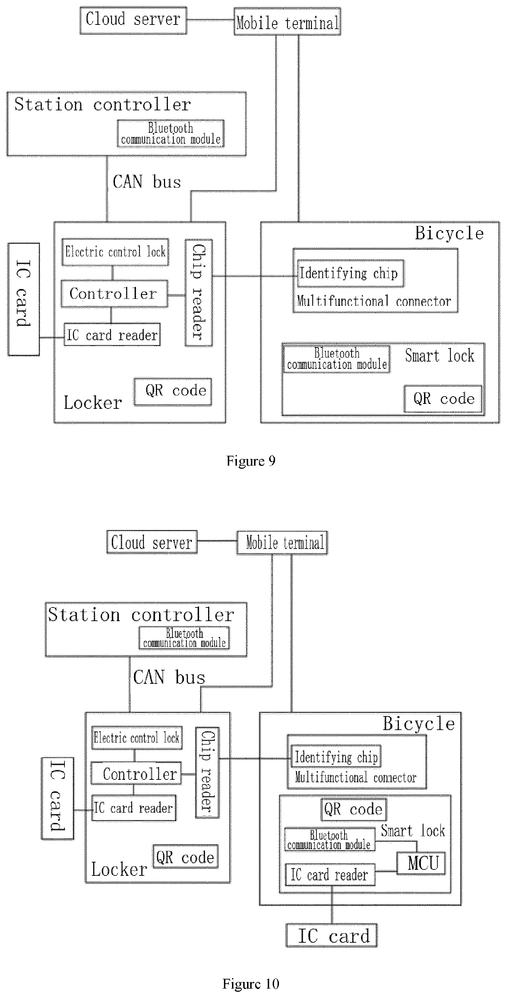

As shown in Figure 9 and Figure 10, the rental system in this embodiment is an integrated system including stations, bicycles, and cloud servers. The station includes a station controller and multiple lockers connected by CAN bus; a smart lock containing wireless communication module and a multifunctional connector with built-in electronic card are set on the bicycle body; the electronic card of multifunctional connector has a unique bicycle code and a smart lock identification code; a Bluetooth communication module is set on the locker; the cloud server has the function of identifying the renter; the Bluetooth communication module includes Bluetooth transmitting module and Bluetooth receiving module; the locker includes controller, chip reader, IC card reader, electronic control lock and Bluetooth communication module; the locker's chip reader reads the information of the electronic card of bicycle multifunctional connector and transmits it to the controller for storage; the IC card reader reads the information of IC card and transmits the identification result to the controller; the electronic control lock is used to lock the bicycle multifunctional connector; and the controller controls the locking and unlocking of electronic control lock and the communication between Bluetooth communication module and smart lock to unlock the smart lock; the locker housing is provided with a QR code which contains a Bluetooth identification code of locker Bluetooth communication module and a unique locker code; and the bicycle body or smart lock housing is provided with a QR code which contains a Bluetooth identification code of smart lock and a unique bicycle code. In this embodiment, the smart lock is equipped with GPRS and GPS chips.

When returning a bicycle, the bicycle multifunctional connector is inserted into the locker, and the electronic control lock of locker locks the multifunctional connector to complete the returning; the locker's chip reader reads the information of the electronic card of bicycle multifunctional connector to obtain the unique bicycle code and Bluetooth identification code of smart lock; at the same time, the locker initiates a connection to the smart lock through Bluetooth identification code of smart lock, and transmits the Bluetooth identification code of locker Bluetooth communication module to the smart lock for storage after the connection is established;
When renting a bicycle, the IC card is swiped on the IC card reader of locker; if the IC card cannot be identified, the renting is refused; if the IC card is successfully identified, the controller establishes the Bluetooth connection with smart lock through Bluetooth communication module and Bluetooth identification code of smart lock, and then sends an unlocking signal to unlock the smart lock after the connection is established; at the same time or later, the controller sends an unlocking signal to unlock the electronic control lock of locker to complete the renting;
Alternatively, the IC card is swiped on the IC card reader of locker. If the IC card cannot be identified, the renting is refused; if the IC card is successfully identified, the MCU of smart lock sends information to the Bluetooth communication module, and the controller establishes the Bluetooth connection with smart lock through Bluetooth communication module and Bluetooth identification code of smart lock and then sends an unlocking signal to unlock the smart lock after the connection is established; at the same time or later, the controller sends an unlocking signal to unlock the electronic control lock of locker to complete the renting.

Alternatively, the mobile terminal is used to scan the QR code on the bicycle body or locker housing and verify the identity of mobile terminal user through cloud server; if the identity is wrong, the renting is refused, and if the identity is correct, the smart lock establishes the Bluetooth connection with mobile terminal, an unlocking request is made on the mobile terminal, and the locker controller sends an unlocking signal to unlock the smart lock through Bluetooth communication module; at the same time or later, the controller sends an unlocking signal to unlock the electronic control lock of locker to complete the renting;
Alternatively, the mobile terminal is used to scan the QR code on the bicycle body or smart lock housing and verify the identity of mobile terminal user through cloud server; if the identity is wrong, the renting is refused, and if the identity is correct, the smart lock establishes the Bluetooth connection with mobile terminal, and an request for unlocking the smart lock is made on the mobile terminal; at the same time or later, the Bluetooth identification code of locker Bluetooth communication module temporarily stored in the smart lock is obtained, through which a connection with the locker is established, and the controller sends an unlocking signal to unlock the electronic control lock of locker to complete the renting;
Alternatively, the mobile terminal is used to scan the QR code on the bicycle body or smart lock housing and verify the identity of mobile terminal user through cloud server. If the identity is wrong, the renting is refused. If the identity is correct, the smart lock establishes the Bluetooth connection with mobile terminal to obtain the Bluetooth identification code of locker Bluetooth communication module temporarily stored in the smart lock, through which a connection with the locker is established, and the locker controller sends an unlocking signal to unlock the smart lock through Bluetooth communication module; at the same time or later, the controller sends an unlocking signal to unlock the electronic control lock of locker to complete the renting.

If the bicycle is parked in the locker, scan the code or input the digital code to rent the bicycle, and the locker issues an instruction to set the smart lock to a state in which it can be locked manually; if the bicycle is not parked in the locker, scan the code or input the digital code to rent the bicycle, and the smart lock is maintained in a state in which it can be locked manually;
If the bicycle is not parked in the locker, scan the code or input the digital code or swipe card on the smart lock to rent the bicycle, and the smart lock is maintained in a state in which it can be locked manually;
When renting the bicycle through swiping card, the user returns the bicycle to the locker and the locker sends the bicycle location information to the management platform; or the user scans the QR code on the bicycle body or smart lock or inputs a digital code to establish a contact with the management platform, the management platform sends an instruction to the user mobile terminal after authentication, the user mobile terminal sets the smart lock to be locked manually, the user locks the smart lock to return the bicycle and sends the bicycle location information to the management platform, and the smart lock automatically sends the location information to the management platform;
When renting the bicycle through scanning the code, the user locks the smart lock to return the bicycle and sends the bicycle location information to the management platform, and the smart lock automatically sends location information to the management platform; or the user returns the bicycle to the locker which issues an instruction to set the smart lock to a state in which it cannot be locked manually.

The purpose, technical solution and beneficial effects of this invention are further described in detail in the specific embodiments described above. It should be understood that the above-mentioned embodiments are only specific embodiments of this invention whereas the limits of this invention are defined by the attached claims.

## Claims

1. A highly compatible shared bicycle rental system including stations and bicycles, each station includes multiple lockers;
wherein each bicycle includes a bicycle body, a multifunctional connector and a smart lock set on the bicycle body; wherein the smart lock has a built-in wireless communication module and wherein the multifunctional connector has a built-in electronic card with a unique bicycle code and a smart lock identification code;
wherein a wireless communication module of the same type as that of the smart lock is set on each of the lockers; the wireless communication module of the respective locker includes a wireless transmitting module and wireless receiving module; wherein the wireless communication module is a Bluetooth communication module;
wherein each locker further includes an electronic control lock for locking the multifunctional connector of a respective bicycle of the bicycles, a controller, a chip reader, and an IC card reader;
wherein the locker's chip reader is configured to read the information of the electronic card of the multifunctional connector of the respective bicycle and to transmit it to the locker's controller for storage;
wherein the locker's IC card reader is configured to read the information of an IC card and to transmit the identification results to the locker's controller;
wherein the locker's controller is configured to control the locking and unlocking of the locker's electronic control lock and the communication between the Bluetooth communication module and the bicycle's smart lock to unlock the bicycle's smart lock;
wherein the respective bicycle realizes the locking, its identification and the identification of its smart lock, as well as the unlocking of its smart lock through its multifunctional connector and a respective locker of the lockers;
wherein, when the respective bicycle is parked in the respective locker, the respective locker periodically scans the smart lock of the respective bicycle to maintain it in a state in which it cannot be locked manually;
wherein, when returning the respective bicycle to the respective locker, the multifunctional connector of the respective bicycle is inserted into the respective locker, and the electronic control lock of the respective locker locks the multifunctional connector of the respective bicycle to complete the returning; at the same time, the chip reader of the respective locker reads the information of the electronic card of the multifunctional connector of the respective bicycle to obtain the unique bicycle code and a Bluetooth identification code of the smart lock of the respective bicycle;
wherein, when renting the respective bicycle, the IC card is swiped on the IC card reader of the respective locker; if the IC card cannot be identified, the renting is refused; if the IC card is successfully identified, the controller of the respective locker establishes the Bluetooth connection with the smart lock of the respective bicycle through the Bluetooth communication module of the respective locker and the Bluetooth identification code of the smart lock of the respective bicycle, and sends an unlocking signal to unlock the smart lock of the respective bicycle after the connection is established; at the same time or later, the controller of the respective locker sends an unlocking signal to unlock the electronic control lock of the respective locker to complete the renting;
wherein the IC card is swiped on the respective locker when renting the respective bicycle; after the respective bicycle is rented, the smart lock is maintained in a state in which it cannot be locked manually.

2. The highly compatible shared bicycle rental system according to Claim 1, **characterized in that** the smart lock of a respective bicycle further includes an IC card reader and a MCU; the bicycle's wireless communication module includes a wireless transmitting module and wireless receiving module; an output terminal of the bicycle's IC card reader is connected to the MCU of the respective bicycle; the output terminal of the MCU is connected to the bicycle's wireless communication module; the bicycle's IC card reader is configured to read the information of the IC card and to transmit it to the MCU for identification and transmission to the bicycle's wireless communication module; and a card swiping area is provided on a housing of the smart lock.

3. The highly compatible shared bicycle rental system according to Claim 1 or 2, **characterized in that** a housing of a respective locker is provided with a QR code and/or digital code which contains a Bluetooth identification code of the Bluetooth communication module of the respective locker and a unique locker code; the bicycle body or the housing of the smart lock is provided with a QR code and/or digital code which contains a Bluetooth identification code of the smart lock and a unique bicycle code.

4. The highly compatible shared bicycle rental system according to Claim 3, wherein the highly compatible shared bicycle rental system further includes a background cloud server with the function of identifying a renter.

5. The highly compatible shared bicycle rental system according to claim 2, **characterized in that** the smart lock further includes a GPRS module and/or or GPS module for communicating with the MCU.

6. A bicycle rental method for a highly compatible shared bicycle rental system, wherein a highly compatible shared bicycle rental system is constructed,
wherein the highly compatible shared bicycle rental system includes stations and bicycles, each station includes multiple lockers;
wherein each bicycle includes a bicycle body, a multifunctional connector and a smart lock set on the bicycle body; wherein the smart lock has a built-in wireless communication module and wherein the multifunctional connector has a built-in electronic card with a unique bicycle code and a smart lock identification code;
wherein a wireless communication module of the same type as that of the smart lock is set on each of the lockers; the wireless communication module of the respective locker includes a wireless transmitting module and wireless receiving module; wherein the wireless communication module is a Bluetooth communication module;
wherein each locker further includes an electronic control lock for locking the multifunctional connector of a respective bicycle of the bicycles, a controller, a chip reader, and an IC card reader;
wherein the locker's chip reader reads the information of the electronic card of the multifunctional connector of the respective bicycle and to transmit it to locker's controller for storage;
wherein the locker's IC card reader reads the information of an IC card and to transmit the identification results to the locker's controller;
wherein the locker's controller controls the locking and unlocking of the locker's electronic control lock and the communication between the Bluetooth communication module and the bicycle's smart lock to unlock the bicycle's smart lock;
wherein the respective bicycle realizes the locking, its identification and the identification of its smart lock, as well as the unlocking of its smart lock through its multifunctional connector and a respective locker of the lockers,
wherein, when the respective bicycle is parked in the respective locker, the respective locker periodically scans the smart lock of the respective bicycle to maintain it in a state in which it cannot be locked manually;
wherein, when returning the respective bicycle to the respective locker, the multifunctional connector of the respective bicycle is inserted into the respective locker, and the electronic control lock of the respective locker locks the multifunctional connector of the respective bicycle to complete the returning; at the same time, the chip reader of the respective locker reads the information of the electronic card of the multifunctional connector of the respective bicycle to obtain the unique bicycle code and a Bluetooth identification code of the smart lock of the respective bicycle;
wherein, when renting the respective bicycle, the IC card is swiped on the IC card reader of the respective locker; if the IC card cannot be identified, the renting is refused; if the IC card is successfully identified, the controller of the respective locker establishes the Bluetooth connection with the smart lock of the respective bicycle through the Bluetooth communication module of the respective locker and the Bluetooth identification code of the smart lock of the respective bicycle, and sends an unlocking signal to unlock the smart lock of the respective bicycle after the connection is established; at the same time or later, the controller of the respective locker sends an unlocking signal to unlock the electronic control lock of the respective locker to complete the renting;
wherein the IC card is swiped on the respective locker when renting the respective bicycle; after the respective bicycle is rented, the smart lock is maintained in a state in which it cannot be locked manually.

## Patentansprüche

1. Ein hochkompatibles gemeinsames Fahrradverleihsystem mit Stationen und Fahrrädern, wobei jede Station mehrere Abschließfächer enthält;
wobei jedes Fahrrad einen Fahrradrahmen, einen Multifunktionsverbinder und ein am Fahrradrahmen angebrachtes intelligentes Schloss umfasst; wobei das intelligente Schloss über ein eingebautes drahtloses Kommunikationsmodul verfügt und wobei der Multifunktionsverbinder über eine eingebaute elektronische Karte mit einem eindeutigen Fahrradcode und einem Identifikationscode für das intelligente Schloss verfügt;
wobei an jedem der Abschließfächer ein drahtloses Kommunikationsmodul desselben Typs wie das des intelligenten Schlosses angebracht ist; das drahtlose Kommunikationsmodul des jeweiligen Abschließfachs ein drahtloses Sendemodul und ein drahtloses Empfangsmodul umfasst; wobei das drahtlose Kommunikationsmodul ein Bluetooth-Kommunikationsmodul ist;
wobei jedes Abschließfach ferner ein elektronisch gesteuertes Schloss zum Verriegeln des Multifunktionsanschlusses eines jeweiligen Fahrrads der Fahrräder, eine Steuerung, einen Chipleser und einen IC-Kartenleser umfasst;
wobei der Chipleser des Abschließfachs dazu konfiguriert ist, die Informationen der elektronischen Karte des Multifunktionsanschlusses des jeweiligen Fahrrads zu lesen und zur Speicherung an die Steuerung des Abschließfachs zu übertragen;
wobei der IC-Kartenleser des Abschließfachs so konfiguriert ist, dass er die Informationen einer IC-Karte liest und die Identifizierungsergebnisse an die Steuerung des Abschließfachs überträgt;
wobei die Steuerung des Abschließfachs so konfiguriert ist, dass er das Ver- und Entriegeln des elektronisch gesteuerten Schlosses des Abschließfachs und die Kommunikation zwischen dem Bluetooth-Kommunikationsmodul und dem intelligenten Schloss des Fahrrads steuert, um das intelligente Schloss des Fahrrads zu entriegeln;
wobei das jeweilige Fahrrad das Verriegeln, seine Identifizierung und die Identifizierung seines intelligenten Schlosses sowie das Entriegeln seines intelligenten Schlosses über seinen Multifunktionsverbinder und ein jeweiliges Abschließfach der Abschließfächer realisiert;
wobei, wenn das jeweilige Fahrrad im jeweiligen Abschließfach geparkt ist, das jeweilige Abschließfach das intelligente Schloss des jeweiligen Fahrrads periodisch scannt, um es in einem Zustand zu halten, in dem es nicht manuell verriegelt werden kann;
wobei beim Zurückgeben des jeweiligen Fahrrads zum jeweiligen Abschließfach der Multifunktionsverbinder des jeweiligen Fahrrads in das jeweilige Abschließfach eingesteckt wird und das elektronisch gesteuerte Schloss des jeweiligen Abschließfachs den Multifunktionsverbinder des jeweiligen Fahrrads verriegelt, um die Rückgabe abzuschließen; gleichzeitig liest der Chipleser des jeweiligen Abschließfachs die Informationen der elektronischen Karte des Multifunktionsverbinders des jeweiligen Fahrrads, um den eindeutigen Fahrradcode und einen Bluetooth-Identifikationscode des intelligenten Schlosses des jeweiligen Fahrrads zu erhalten;
wobei beim Ausleihen des jeweiligen Fahrrads die IC-Karte durch den IC-Kartenleser des jeweiligen Abschließfachs gezogen wird; wenn die IC-Karte nicht identifiziert werden kann, wird die Ausleihe abgelehnt; wenn die IC-Karte erfolgreich identifiziert wird, stellt die Steuerung des jeweiligen Abschließfachs über das Bluetooth-Kommunikationsmodul des jeweiligen Abschließfachs und den Bluetooth-Identifikationscode des intelligenten Schlosses des jeweiligen Fahrrads eine Bluetooth-Verbindung mit dem intelligenten Schloss des jeweiligen Fahrrads her und sendet nach Herstellung der Verbindung ein Entriegelungssignal, um das intelligente Schloss des jeweiligen Fahrrads zu entriegeln; gleichzeitig oder später sendet die Steuerung des jeweiligen Abschließfachs ein Entriegelungssignal, um das elektronisch gesteuerte Schloss des jeweiligen Abschließfachs zu entriegeln und die Ausleihe abzuschließen;
wobei die IC-Karte beim Ausleihen des jeweiligen Fahrrads durch das jeweilige Abschließfach gezogen wird; nachdem das jeweilige Fahrrad ausgeliehen wurde, wird das intelligente Schloss in einem Zustand gehalten, in dem es nicht manuell verriegelt werden kann.

2. Das hochkompatible Fahrradverleihsystem nach Anspruch 1, **dadurch gekennzeichnet, dass** das intelligente Schloss eines jeweiligen Fahrrads ferner einen IC-Kartenleser und eine MCU umfasst; das drahtlose Kommunikationsmodul des Fahrrads umfasst ein drahtloses Sendemodul und ein drahtloses Empfangsmodul; ein Ausgangsanschluss des IC-Kartenlesers des Fahrrads ist mit der MCU des jeweiligen Fahrrads verbunden; der Ausgangsanschluss der MCU ist mit dem drahtlosen Kommunikationsmodul des Fahrrads verbunden; der IC-Kartenleser des Fahrrads ist so konfiguriert, dass er die Informationen der IC-Karte liest und sie zur Identifizierung an die MCU und zur Übertragung an das drahtlose Kommunikationsmodul des Fahrrads überträgt; und an einem Gehäuse des intelligenten Schlosses ist ein Kartenlesebereich vorgesehen.

3. Das hochkompatible Fahrradverleihsystem nach Anspruch 1 oder 2, **dadurch gekennzeichnet, dass** ein Gehäuse eines jeweiligen Abschließfachs mit einem QR-Code und/oder digitalen Code versehen ist, der einen Bluetooth-Identifikationscode des Bluetooth-Kommunikationsmoduls des jeweiligen Abschließfachs und einen eindeutigen Abschließfachcode enthält; der Fahrradkörper oder das Gehäuse des intelligenten Schlosses ist mit einem QR-Code und/oder digitalen Code versehen, der einen Bluetooth-Identifikationscode des intelligenten Schlosses und einen eindeutigen Fahrradcode enthält.

4. Das hochkompatible Fahrradverleihsystem gemäß Anspruch 3, wobei das hochkompatible gemeinsame Fahrradverleihsystem außerdem einen Hintergrund-Cloud-Server mit der Funktion zur Identifizierung eines Ausleihers umfasst.

5. Das hochkompatible Fahrradverleihsystem nach Anspruch 2, **dadurch gekennzeichnet, dass** das intelligente Schloss außerdem ein GPRS-Modul und/oder ein GPS-Modulzur Kommunikation mit der MCU enthält.

6. Ein Fahrradverleihverfahren für ein hochkompatibles gemeinsames Fahrradverleihsystem, wobei ein hochkompatibles gemeinsames Fahrradverleihsystem aufgebaut wird,
wobei das hochkompatible gemeinsame Fahrradverleihsystem Stationen und Fahrräder umfasst und jede Station mehrere Abschließfächer umfasst;
wobei jedes Fahrrad einen Fahrradrahmen, einen Multifunktionsverbinder und ein am Fahrradrahmen angebrachtes intelligentes Schloss umfasst; wobei das intelligente Schloss über ein eingebautes drahtloses Kommunikationsmodul verfügt und wobei der Multifunktionsverbinder über eine eingebaute elektronische Karte mit einem eindeutigen Fahrradcode und einem Identifikationscode für das intelligente Schloss verfügt;
wobei an jedem der Abschließfächer ein drahtloses Kommunikationsmodul desselben Typs wie das des intelligenten Schlosses angebracht ist; das drahtlose Kommunikationsmodul des jeweiligen Abschließfachs ein drahtloses Sendemodul und ein drahtloses Empfangsmodul umfasst; wobei das drahtlose Kommunikationsmodul ein Bluetooth-Kommunikationsmodul ist;
wobei jedes Abschließfach ferner ein elektronisch gesteuertes Schloss zum Verriegeln des Multifunktionsanschlusses eines jeweiligen Fahrrads der Fahrräder, eine Steuerung, einen Chipleser und einen IC-Kartenleser umfasst;
wobei der Chipleser des Abschließfachs die Informationen der elektronischen Karte des Multifunktionsanschlusses des jeweiligen Fahrrads liest und zur Speicherung an die Steuerung des Abschließfachs überträgt;
wobei der IC-Kartenleser des Abschließfachs die Informationen einer IC-Karte liest und die Identifizierungsergebnisse an die Steuerung des Abschließfachs überträgt;
wobei die Steuerung des Abschließfachs das Ver- und Entriegeln des elektronisch gesteuerten Schlosses des Abschließfachs und die Kommunikation zwischen dem Bluetooth-Kommunikationsmodul und dem intelligenten Schloss des Fahrrads steuert, um das intelligente Schloss des Fahrrads zu entriegeln;
wobei das jeweilige Fahrrad die Verriegelung, seine Identifizierung und die Identifizierung seines intelligente Schlosses sowie die Entriegelung seines intelligente Schlosses über seinen Multifunktionsverbinder und ein jeweiliges Abschließfach der Abschließfächer realisiert,
wobei, wenn das jeweilige Fahrrad im jeweiligen Abschließfach geparkt ist, das jeweilige Abschließfach das intelligente Schloss des jeweiligen Fahrrads periodisch scannt, um es in einem Zustand zu halten, in dem es nicht manuell verriegelt werden kann;
wobei beim Zurückgeben des jeweiligen Fahrrads zum jeweiligen Abschließfach der Multifunktionsverbinder des jeweiligen Fahrrads in das jeweilige Abschließfach eingesteckt wird und das elektronisch gesteuerte Schloss des jeweiligen Abschließfachs den Multifunktionsverbinder des jeweiligen Fahrrads verriegelt, um die Rückgabe zu vervollständigen; gleichzeitig liest der Chipleser des jeweiligen Abschließfachs die Informationen der elektronischen Karte des Multifunktionsverbinders des jeweiligen Fahrrads, um den eindeutigen Fahrradcode und einen Bluetooth-Identifikationscode des intelligenten Schlosses des jeweiligen Fahrrads zu erhalten;
wobei beim Ausleihen des jeweiligen Fahrrads die IC-Karte durch den IC-Kartenleser des jeweiligen Abschließfachs gezogen wird; wenn die IC-Karte nicht identifiziert werden kann, wird die Ausleihe abgelehnt; wenn die IC-Karte erfolgreich identifiziert wird, stellt die Steuerung des jeweiligen Abschließfachs über das Bluetooth-Kommunikationsmodul des jeweiligen Abschließfachs und den Bluetooth-Identifikationscode des intelligenten Schlosses des jeweiligen Fahrrads eine Bluetooth-Verbindung mit dem intelligenten Schloss des jeweiligen Fahrrads her und sendet nach Herstellung der Verbindung ein Entriegelungssignal, um das intelligente Schloss des jeweiligen Fahrrads zu entriegeln; gleichzeitig oder später sendet die Steuerung des jeweiligen Abschließfachs ein Entriegelungssignal, um das elektronisch gesteuerte Schloss des jeweiligen Abschließfachs zu entriegeln und die Ausleihe zu vervollständigen;
wobei die IC-Karte beim Ausleihen des jeweiligen Fahrrads durch das jeweilige Abschließfach gezogen wird; nachdem das jeweilige Fahrrad ausgeliehen wurde, wird das intelligente Schloss in einem Zustand gehalten, in dem es nicht manuell verriegelt werden kann.

## Revendications

1. Un système de location de vélos partagés hautement compatible comprenant des stations et des vélos, chaque station comprenant plusieurs casiers ;
dans lequel chaque vélo comprend un corps de vélo, un connecteur multifonctionnel et un verrou intelligent fixé sur le corps de vélo ; dans lequel le verrou intelligent possède un module de communication sans fil intégré et dans lequel le connecteur multifonctionnel possède une carte électronique intégrée avec un code de vélo unique et un code d'identification de verrou intelligent ;
dans lequel un module de communication sans fil du même type que celui de la serrure intelligente est installé sur chacun des casiers ; le module de communication sans fil du casier respectif comprend un module de transmission sans fil et un module de réception sans fil ; dans lequel le module de communication sans fil est un module de communication Bluetooth ;
dans lequel chaque casier comprend en outre un verrou de commande électronique pour verrouiller le connecteur multifonctionnel d'un vélo respectif des vélos, un contrôleur, un lecteur de puce et un lecteur de carte à puce ;
dans lequel le lecteur de puce du casier est configuré pour lire les informations de la carte électronique du connecteur multifonctionnel du vélo respectif et pour les transmettre au contrôleur du casier pour stockage ;
dans lequel le lecteur de carte à puce du casier est configuré pour lire les informations d'une carte à puce et pour transmettre les résultats d'identification au contrôleur du casier ;
dans lequel le contrôleur du casier est configuré pour contrôler le verrouillage et le déverrouillage du verrou de commande électronique du casier et la communication entre le module de communication Bluetooth et le verrou intelligent du vélo pour déverrouiller le verrou intelligent du vélo ;
dans lequel le vélo respectif réalise le verrouillage, son identification et l'identification de son verrou intelligent, ainsi que le déverrouillage de son verrou intelligent via son connecteur multifonctionnel et un casier respectif des casiers ;
dans lequel, lorsque le vélo respectif est garé dans le casier respectif, le casier respectif scanne périodiquement le verrou intelligent du vélo respectif pour le maintenir dans un état dans lequel il ne peut pas être verrouillé manuellement ;
dans lequel, lors du retour du vélo respectif au casier respectif, le connecteur multifonctionnel du vélo respectif est inséré dans le casier respectif, et le verrou de commande électronique du casier respectif verrouille le connecteur multifonctionnel du vélo respectif pour terminer le retour ; en même temps, le lecteur de puce du casier respectif lit les informations de la carte électronique du connecteur multifonctionnel du vélo respectif pour obtenir le code de vélo unique et un code d'identification Bluetooth du verrou intelligent du vélo respectif ;
dans lequel, lors de la location du vélo respectif, la carte IC est glissée sur le lecteur de carte IC du casier respectif ; si la carte IC ne peut pas être identifiée, la location est refusée ; si la carte IC est identifiée avec succès, le contrôleur du casier respectif établit la connexion Bluetooth avec le verrou intelligent du vélo respectif via le module de communication Bluetooth du casier respectif et le code d'identification Bluetooth du verrou intelligent du vélo respectif, et envoie un signal de déverrouillage pour déverrouiller le verrou intelligent du vélo respectif après l'établissement de la connexion ; en même temps ou plus tard, le contrôleur du casier respectif envoie un signal de déverrouillage pour déverrouiller le verrou de commande électronique du casier respectif pour terminer la location ;
dans lequel la carte IC est glissée sur le casier respectif lors de la location du vélo respectif ; après la location du vélo respectif, le verrou intelligent est maintenu dans un état dans lequel il ne peut pas être verrouillé manuellement.

2. Système de location de vélos partagés hautement compatible selon la revendication 1, **caractérisé en ce que** le cadenas intelligent d'un vélo respectif comprend en outre un lecteur de carte à puce et un MCU ; le module de communication sans fil du vélo comprend un module de transmission sans fil et un module de réception sans fil ; une borne de sortie du lecteur de carte à puce du vélo est connectée au MCU du vélo respectif ; la borne de sortie du MCU est connectée au module de communication sans fil du vélo ; le lecteur de carte à puce du vélo est configuré pour lire les informations de la carte à puce et pour les transmettre au MCU pour identification et transmission au module de communication sans fil du vélo ; et une zone de glissement de carte est prévue sur un boîtier de la serrure intelligente.

3. Système de location de vélos partagés hautement compatible selon la revendication 1 ou 2, **caractérisé en ce que** un boîtier d'un casier respectif est pourvu d'un code QR et/ou d'un code numérique qui contient un code d'identification Bluetooth du module de communication Bluetooth du casier respectif et un code de casier unique ; le corps de vélo ou le boîtier du cadenas intelligent est pourvu d'un code QR et/ou d'un code numérique qui contient un code d'identification Bluetooth du cadenas intelligent et un code de vélo unique.

4. Système de location de vélos partagés hautement compatible selon la revendication 3, dans lequel le système de location de vélos partagés hautement compatible comprend en outre un serveur cloud d'arrière-plan avec la fonction d'identifier un locataire.

5. Système de location de vélos partagés hautement compatible selon la revendication 2, **caractérisé en ce que** la serrure intelligente comprend en outre un module GPRS et/ ou un module GPS pour communiquer avec le MCU.

6. Un procédé de location de vélos pour un système de location de vélos partagés hautement compatible, dans lequel un système de location de vélos partagés hautement compatible est construit,
dans lequel le système de location de vélos partagés hautement compatible comprend des stations et des vélos, chaque station comprend plusieurs casiers ;
dans lequel chaque vélo comprend un corps de vélo, un connecteur multifonctionnel et un verrou intelligent fixé sur le corps de vélo ; dans lequel le verrou intelligent possède un module de communication sans fil intégré et dans lequel le connecteur multifonctionnel possède une carte électronique intégrée avec un code de vélo unique et un code d'identification de verrou intelligent ;
dans lequel un module de communication sans fil du même type que celui de la serrure intelligente est installé sur chacun des casiers ; le module de communication sans fil du casier respectif comprend un module de transmission sans fil et un module de réception sans fil ; dans lequel le module de communication sans fil est un module de communication Bluetooth ;
dans lequel chaque casier comprend en outre un verrou de commande électronique pour verrouiller le connecteur multifonctionnel d'un vélo respectif des vélos, un contrôleur, un lecteur de puce et un lecteur de carte à puce ;
dans lequel le lecteur de puce du casier lit les informations de la carte électronique du connecteur multifonctionnel du vélo respectif et les transmet au contrôleur du casier pour stockage ;
dans lequel le lecteur de carte à puce du casier lit les informations d'une carte à puce et transmet les résultats d'identification au contrôleur du casier ;
dans lequel le contrôleur du casier contrôle le verrouillage et le déverrouillage du verrou de contrôle électronique du casier et la communication entre le module de communication Bluetooth et le verrou intelligent du vélo pour déverrouiller le verrou intelligent du vélo ;
dans lequel le vélo respectif réalise le verrouillage, son identification et l'identification de son verrou intelligent, ainsi que le déverrouillage de son verrou intelligent via son connecteur multifonctionnel et un casier respectif des casiers,
dans lequel, lorsque le vélo respectif est garé dans le casier respectif, le casier respectif scanne périodiquement le verrou intelligent du vélo respectif pour le maintenir dans un état dans lequel il ne peut pas être verrouillé manuellement ;
dans lequel, lors du retour du vélo respectif au casier respectif, le connecteur multifonctionnel du vélo respectif est inséré dans le casier respectif, et le verrou de commande électronique du casier respectif verrouille le connecteur multifonctionnel du vélo respectif pour terminer le retour ; en même temps, le lecteur de puce du casier respectif lit les informations de la carte électronique du connecteur multifonctionnel du vélo respectif pour obtenir le code de vélo unique et un code d'identification Bluetooth du verrou intelligent du vélo respectif ;
dans lequel, lors de la location du vélo respectif, la carte IC est glissée sur le lecteur de carte IC du casier respectif ; si la carte IC ne peut pas être identifiée, la location est refusée ; si la carte IC est identifiée avec succès, le contrôleur du casier respectif établit la connexion Bluetooth avec le verrou intelligent du vélo respectif via le module de communication Bluetooth du casier respectif et le code d'identification Bluetooth du verrou intelligent du vélo respectif, et envoie un signal de déverrouillage pour déverrouiller le verrou intelligent du vélo respectif après l'établissement de la connexion ; en même temps ou plus tard, le contrôleur du casier respectif envoie un signal de déverrouillage pour déverrouiller le verrou de commande électronique du casier respectif pour terminer la location ;
dans lequel la carte IC est glissée sur le casier respectif lors de la location du vélo respectif ; après la location du vélo respectif, le verrou intelligent est maintenu dans un état dans lequel il ne peut pas être verrouillé manuellement.
